(19) **Europäisches Patentamt European Patent Office Office européen des brevets**

(11) **EP 3 643 731 B1**

(12) **EUROPEAN PATENT SPECIFICATION**

(45) Date of publication and mention of the grant of the patent:
**15.05.2024 Bulletin 2024/20**

(21) Application number: **18821403.5**

(22) Date of filing: **24.05.2018**

(51) International Patent Classification (IPC):
**C08G 18/00** (2006.01)    **C08G 18/18** (2006.01)
**C08G 18/48** (2006.01)    **C08G 101/00** (2006.01)
**C08G 18/76** (2006.01)    **C08G 18/63** (2006.01)

(52) Cooperative Patent Classification (CPC):
**C08G 18/7671; C08G 18/18; C08G 18/4833;**
**C08G 18/4841; C08G 18/632; C08G 18/7621;**
C08G 2110/0008; C08G 2110/0058;
C08G 2110/0083; C08G 2350/00

(86) International application number:
**PCT/JP2018/019947**

(87) International publication number:
**WO 2018/235515 (27.12.2018 Gazette 2018/52)**

(54) **COMPOSITION FOR SOFT POLYURETHANE FOAM, SOFT POLYURETHANE FOAM, AND VEHICLE SEAT PAD**

ZUSAMMENSETZUNG FÜR POLYURETHANWEICHSCHAUM, POLYURETHANWEICHSCHAUM UND FAHRZEUGSITZKISSEN

COMPOSITION POUR MOUSSE POLYURÉTHANE SOUPLE, MOUSSE POLYURÉTHANE SOUPLE, ET COUSSIN DE SIÈGE POUR VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.06.2017 JP 2017120649**

(43) Date of publication of application:
**29.04.2020 Bulletin 2020/18**

(73) Proprietor: **Archem Inc.**
**Tokyo 108-0075 (JP)**

(72) Inventors:
• **SANEFUJI, Koji**
**Tokyo 104-8340 (JP)**

• **WATANABE, Mitsuhiko**
**Tokyo 104-8340 (JP)**
• **SEGUCHI, Hideharu**
**Tokyo 104-8340 (JP)**

(74) Representative: **Marks & Clerk LLP**
**15 Fetter Lane**
**London EC4A 1BW (GB)**

(56) References cited:
**EP-A1- 1 125 958**    **WO-A1-2015/190595**
**JP-A- 2000 038 431**    **JP-A- 2000 290 337**
**JP-A- 2009 529 597**    **JP-A- 2013 529 702**
**US-A- 5 063 253**    **US-A1- 2017 121 448**

**Description**

Technical Field

The present invention relates to a composition for soft polyurethane foam, a soft polyurethane foam, and a vehicle seat pad.

Background Art

As having an excellent cushion property, a soft polyurethane foam is widely used for seat pads for vehicles, etc.

A vehicle seat pad is desired to satisfy both a cushion property for realizing comfortableness such as good sitting feeling and a high vibration absorbability to absorb vibration of engines, etc.

Further, recently, a low-density seat pad capable of meeting the requirement for weight reduction of vehicles and others is desired.

For example, for a vehicle seat pad, a polyurethane foam is disclosed that contains a specific amount of a specific polyol per 100 parts by mass of a polyol component for satisfying both high impact resilience and high vibration absorbability (PTL 1).

Citation List

Patent Literature

PTL 1: JP 2016-30802A

Summary of Invention

Technical Problem

Presupposing the satisfaction of both cushion property and high vibration absorbability in conventional technology, the lowest limit of a realizable density is 65 kg/m$^3$ or so. As a means for density reduction, a method of increasing the amount of water to be used as a foaming agent in producing a urethane foam to thereby increase the amount of $CO_2$ to be generated may be taken into consideration, which, however, results in urea bond increase owing to the increase in the amount of water used. When a urea bond increases, the resultant urethane foam becomes hard as the rigidity thereof increases, and the cushion property thereof is therefore worsened, and a urethane foam having a low density and having an excellent cushion property has not as yet been found out.

An object of the present invention is to provide a composition for soft polyurethane foam satisfying both cushion property and high vibration absorbability and having a low density, and to provide such a soft polyurethane foam and a vehicle seat pad.

Solution to Problem

The present invention relates to the following <1> to <7>.

<1> A composition for soft polyurethane foam, containing a polyol component, an isocyanate component, a foaming agent, a cell opening agent, a foam stabilizer and a catalyst, wherein the catalyst is an amine catalyst having 11 or more carbon atoms, and the cell opening agent is a polyol having an ethylene oxide content of more than 50 mol%, the foam stabilizer is a high-activity silicone, the high-activity silicone has a surface tension of 22 mN/m or more, and the content of the high-activity silicone foam stabilizer is 0.7 to 1.2 parts by mass of the polyol component.

<2> A soft polyurethane foam, which is formed by foaming a foaming raw liquid containing a polyol component, an isocyanate component, a foaming agent, a cell opening agent, a foam stabilizer and a catalyst, wherein the catalyst is an amine catalyst having 11 or more carbon atoms, and the cell opening agent is a polyol having an ethylene oxide content of more than 50 mol%, the foaming raw liquid further contains a foam stabilizer, the foam stabilizer is a high-activity silicone, the high-activity silicone has a surface tension of 22 mN/m or more and the content of the high-activity silicone foam stabilizer is 0.7 to 1.2 parts by mass of the polyol component.

<3> The soft polyurethane foam according to <2>, wherein the blending amount of the catalyst is 1.5 parts by mass or less per 100 parts by mass of the polyol component.

<4> The soft polyurethane foam according to <2> or <3>, wherein the catalyst is an amine catalyst having 11 to 24 carbon atoms.

<5> The soft polyurethane foam according to any of <2> to <4>, wherein the blending amount of the foam stabilizer is 0.5 parts by mass or more per 100 parts by mass of the polyol component.

<6> A vehicle seat pad including a soft polyurethane foam of any of <2> to <5>.

<7> The composition for soft polyurethane foam according to <1> or the soft polyurethane foam according to <2>, wherein the isocyanate component comprises tolylene diisocyanate.

Advantageous Effects of Invention

According to the present invention, there can be provided a composition for soft polyurethane foam satisfying both cushion property and high vibration absorbability and having a low density, such a soft polyurethane foam and a vehicle seat pad.

Description of Embodiments

Hereinunder the present invention is described in detail based on the embodiments thereof. In the following description, a numerical range expressed as "A to B" means a numerical range that includes the end points A and B. Part by mass and % by mass are the same as part by weight and % by weight, respectively.

<Soft Polyurethane Foam>

The soft polyurethane foam of the present invention is obtained from a composition for soft polyurethane foam that contains a polyol component, an isocyanate component, a foaming agent, a cell opening agent of a polyol having an ethylene oxide content of more than 50 mol%, a foam stabilizer of a high-activity silicone having a surface tension of 22 mN/m or more, which is 0.7 to 1.2 parts by mass per 100 parts by mass of the polyol component, and an amine catalyst having 11 or more carbon atoms. Specifically, the soft polyurethane foam is obtained by foaming a foaming raw liquid that contains a polyol component, an isocyanate component, a foaming agent, a cell opening agent having an ethylene oxide content of more than 50 mol%, a foam stabilizer of a high-activity silicone having a surface tension of 22 mN/m or more, which is 0.7 to 1.2 parts by mass per 100 parts by mass of the polyol component, and an amine catalyst having 11 or more carbon atoms. In this description, the foaming raw liquid is a composition for soft polyurethane foam.

Having the above-mentioned constitution, the soft polyurethane foam satisfying both cushion property and high vibration absorbability and having a low density can be realized.

The reason why the soft polyurethane foam of the present invention has the above-mentioned characteristics of "satisfying both cushion property and high vibration absorbability and having a low density" can be considered to be as follows.

In producing the soft polyurethane foam, various reactions of forming a urethane bond, a urea bond, a burette bond, an allophanate bond and the like occur.

An amine catalyst having 11 or more carbon atoms used in the present invention improves a cushion property of a urethane foam surface.

In addition, it catalyzes a rapid urethane bond forming reaction in a urethane foam surface, therefore reducing a cell size in a urethane foam without increasing a closed cell ratio therein. Accordingly, a urethane foam can be given a high vibration absorbability.

In the present invention, a polyol having an ethylene oxide content of more than 50 mol% is used as a cell opening agent. Owing to the presence of a polyol having an ethylene oxide content of more than 50 mol%, a urethane bond is preferentially formed to improve the cushion property of a urethane foam.

[Characteristics of Soft Polyurethane Foam]

The soft polyurethane foam of the present invention has both cushion property and high vibration absorbability and has a low density.

A cushion property can be evaluated by a hysteresis loss of a vehicle seat pad. The hysteresis loss is preferably 18% or less, more preferably 16% or less. When the hysteresis loss is 18% or less, a reaction force to a microdisplacement behavior after sitting is smaller, therefore improving a cushion property and bettering a comfortableness in sitting.

The high vibration absorbability is preferably such that the resonance frequency is 3.9 Hz or less and the vibration magnification is 3.8 times or less, more preferably the resonance frequency is 3.7 Hz or less and the vibration magnification is 3.6 times or less, and even more preferably the resonance frequency is 3.6 Hz or less and the vibration magnification is 3.3 times or less.

The resonance frequency and the vibration magnification tend to depend on the density, the closed cell ratio, the cell size, the hardness and the air permeability of the soft polyurethane foam.

The density is preferably less than 65 kg/m$^3$. From the viewpoint of the hardness and the durability to human load of a seat pad and from the viewpoint of reducing the weight thereof, the density is preferably 35 to 63 kg/m$^3$, more preferably 38 to 60 kg/m$^3$, and even more preferably 40 to 57 kg/m$^3$.

In this description, the density is an overall density measured according to JIS K-6400-2 (2004).

When too soft, a vehicle seat pad may bend largely and may often touch the seat bottom. On the contrary, when too hard, a vehicle seat pad may bend too small and the surface thereof is too hard.

The hardness (25% ILD; Indentation Load Deflection) is, from the viewpoint of the cushion property of the soft polyurethane foam, preferably 200 to 300 N/314 cm$^2$, more preferably 220 to 280 N/314 cm$^2$, and even more preferably 230 to 270 N/314 cm$^2$.

In this description, the hardness is a value measured as a load (N/314 cm$^2$) when the soft polyurethane foam is 25% compressed with a pressure plate having a diameter of 200 mm, according to a method of JIS K

6400.

The air permeability depends on the size and the amount of foams in the soft polyurethane foam, and can be controlled based on the size of foams and the degree of breakage of foams. A target level of the air permeability is 45 ml/cm$^2$/s or less.

The air permeability is determined according to a method of JIS K6400-7 (2012), using a sample specimen of 10 mm thick as cut out from the internal center part of a molded soft polyurethane foam (length 400 mm × width 400 mm × thickness 100 mm).

The cell diameter of a surface layer (also referred to as a skin layer) of the soft polyurethane foam is preferably 400 μm or less, more preferably 100 to 320 μm.

By reducing the cell diameter and giving cells a viscous action associated with air permeation therethrough, the vibration absorbability of the soft polyurethane foam increases. When the cell diameter is 320 μm or less, excessive increase in air permeability is suppressed, the cushion property of resin could hardly improve, vibration transmissibility of resin itself could be hardly strong, and the vibration absorbability of the soft polyurethane foam could hardly worsen. On the other hand, when the cell diameter is 100 μm or more, the soft polyurethane foam can be readily given a cushion property.

The constituent components of a foaming raw liquid for producing the soft polyurethane foam of the present invention are described in detail hereinunder.

[Polyol Component]

The foaming raw liquid contains a polyol component.

The polyol component is not specifically limited, for which usable is a general polyether polyol having a hydroxyl value of 15 to 200 mgKOH/g. The polyol component may contain a polymer polyol except a polyether polyol.

(Polyether Polyol)

The polyether polyol is preferably a polyether polyol (hereinafter referred to as a specific polyol) produced through ring-opening polymerization of ethylene oxide (EO) and propylene oxide (hereinafter this may be referred to as PO). The mass ratio (EO/PO) of the recurring unit derived from EO to the recurring unit derived from PO in the specific polyol is preferably 5/95 to 25/75.

The polymerization mode for the polyether polyol is not specifically limited, and the polyether polyol may be a random copolymer or a block copolymer, but is preferably a block copolymer. From the viewpoint of moldability and reactivity, a block of an EO unit is preferably at the molecular terminal. More preferably, the specific polyol has a block of a PO unit inside the molecule and the molecular terminal thereof is a block of an EO unit.

The kind of the functional group that the polyether polyol has is not specifically limited, but preferably, the functional group is at least one of a terminal propylene oxide group and a terminal ethylene oxide group. More preferably, the functional group is a terminal ethylene oxide group.

The number of the functional group that the polyether polyol has is not specifically limited, and may be one or two or more per one molecule. The number of the functional groups that the specific polyol has is preferably 3 or 4 from the viewpoint of cushion property.

As the polyether polyol, a commercially-available product is usable.

(Polymer Polyol)

When the polyol component contains a polymer polyol, cushion property and hardness can be prevented from lowering in the case where water is used as a foaming agent.

The polymer polyol is not specifically limited, and a general polymer polyol for polyurethane foam formation can be used. Specifically, examples thereof include a specific polyol containing a polymer component such as polyacrylonitrile or polyacrylonitrile/styrene copolymer dispersed therein, and in particular, one produced by dispersing a polyacrylonitrile/styrene copolymer in a specific polyol is preferably used.

A commercially-available product may be used for the polymer polyol.

The polymer polyol content in the polyol component is preferably 0 to 90 parts by mass per 100 parts by mass of the polyol component, more preferably 10 to 60 parts by mass. When the content is 60 parts by mass or less, the foaming raw liquid is given a lowest limit of defoamability and can therefore control the air permeability of the resultant foam. Increase in the specific polyol component can maintain cushion property.

(Crosslinking Agent)

The polyol component may contain a crosslinking agent.

The crosslinking agent may be an ordinary one for polyurethane foam molded articles. For example, an ethylene oxide terminal crosslinking agent, or a propylene oxide terminal crosslinking agent can be used.

[Isocyanate Component]

The foaming raw liquid contains an isocyanate component.

The isocyanate compound may be any one of known various functional aliphatic, alicyclic or aromatic isocyanates. Examples thereof include tolylene diisocyanate (TDI), diphenylmethane diisocyanate (MDI), dicyclohexylmethane diisocyanate, triphenyl diisocyanate, xylene diisocyanate, polymethylene polyphenylene polyisocyanate, hexamethylene diisocyanate, isophorone diisocyanate, orthotoluidine diisocyanate, naphthylene diisocyanate, xylylene diisocyanate, and lysine diisocyanate. One alone of these or two or more of these may be used either singly or as combined.

In the present invention, from the viewpoint of a molding density region, the isocyanate component preferably contains tolylene diisocyanate (TDI) and/or diphenylmethane diisocyanate (MDI).

The content of the polyisocyanate component in the foaming raw liquid is not specifically limited, but is, from the viewpoint of easiness in stirring the foaming raw liquid and of realizing a good foaming and molding state, such that the the molar ratio as percentage of the isocyanate group (NCO group) in the polyisocyanate component to the active hydrogen group (OH group) in the foaming raw liquid (NCO group/OH group $\times$ 100; hereinafter this may be referred to as an index) preferably 70 to 120, more preferably 80 to 110.

[Foaming Agent]

The foaming raw liquid contains a foaming agent.

The foaming agent is, for example, water.

The blending amount of the foaming agent is preferably 0.5 parts by mass or more per 100 parts by mass of the polyol component.

[Cell Opening Agent]

The foaming raw liquid contains a cell opening agent.

The cell opening agent is a polyol having an ethylene oxide content of more than 50 mol%, and the ethylene oxide content thereof is preferably 70 to 100 mol%.

Further, regarding the polyol to be used as the cell opening agent, the hydroxyl value thereof is preferably 20 to 110 mgKOH/g, the number of functional groups therein is preferably 3 to 7, and the weight-average molecular weight thereof is preferably 3000 to 12000.

The content of the cell opening agent is, from the viewpoint of satisfying both cushion property and high vibration absorbability, preferably 1 to 10 parts by mass per 100 parts by mass of the total of the polyol component and the cell opening agent, more preferably 2 to 10 parts by mass, even more preferably 3 to 8 parts by mass.

[Catalyst]

The foaming raw liquid contains a catalyst.

The catalyst contains an amine catalyst having 11 or more carbon atoms as a main component therein. The carbon number of the amine catalyst is preferably 11 to 24, more preferably 11 to 15.

In this description, the main component means a component whose content is the largest, and the content is typically 50% by mass or more.

The amine catalyst having 11 or more carbon atoms is not specifically limited, and examples thereof include N,N-dimethyldodecylamine, N,N-dimethyldecylamine, and N,N-dimethyl-n-octadecylamine.

The content of the amine catalyst having 11 or more carbon atoms in the foaming raw liquid is, from the viewpoint of satisfying both cushion property and high vibration absorbability, preferably 0.2 to 1.5 parts by mass per 100 parts by mass of the polyol component, more preferably 0.3 to 1.0 part by mass.

As the other catalyst, any one ordinarily used in production of a soft polyurethane foam can be used, and depending on the use and the demand thereof, two or more kinds may be used in combination. Specifically, the other catalyst includes amine catalysts such as tetramethylhexamethylenediamine, pentamethyldiethylenetriamine, dimethylcyclohexylamine, bis(dimethylaminoethyl) ether, tetramethylpropylenediamine, trimethylaminoethylpiperazine, tetramethylethylenediamine, dimethylbenzylamine, methylmorpholine, ethylmorpholine, triethylenediamine and diethanolamine, and tin-based catalysts such as stannous octoate and dibutyltin dilaurate. A commercially-available product can be used as the catalyst. For example, triethylenediamine (TEDA-L33, available from Tosoh Corporation), and bis(dimethylaminoethyl) ether (TOYOCAT-ET, available from Tosoh Corporation) are favorably used.

The content of the catalyst in the foaming raw liquid is not specifically limited but is preferably 0.1 to 2 parts by mass per 100 parts by mass of the polyol component, more preferably 0.3 to 1.5 parts by mass, even more preferably 0.5 to 1.2 parts by mass.

[Foam Stabilizer]

The foaming raw liquid further contains a foam stabilizer.

Using a foam stabilizer makes it easy to control the size (cell diameter) of foams in the resultant soft polyurethane foam.

In general, a polyether/siloxane-type silicone-based surfactant having a linear, branched or pendant structure is used, and for example, a polydimethylolsiloxane-polyalkylene oxide block copolymer and a vinylsilanepolyalkylpolyol polymer can be used.

In the present invention, a high-activity silicone is used as the foam stabilizer. Using a high-activity silicone prevents breakage of foams in molding, makes it easy to form a large number of fine closed cells, and improves high vibration absorbability. In this description, a high-activity silicone means a silicone having a surface tension of 22 mN/m or more. The surface tension is a value measured according to a capillary-rise method.

The content of the foam stabilizer in the foaming raw liquid is, from the viewpoint of satisfying both cushion property and high vibration absorbability, 0.7 to 1.2 parts by mass per 100 parts by mass of the polyol component.

With increase in the foam stabilizer content, closed cells are easy to form and the cushion property may be thereby lowered, but when the foam stabilizer content is controlled to fall within the above range, both cushion property and high vibration absorbability can be satisfied.

[Optional Components]

The foaming raw liquid may contain various additives as optional components.

Examples of the additives include a colorant such as a pigment, a chain extender, a filler such as calcium carbonate, a flame retardant, an antioxidant, a UV absorbent, a light stabilizer, an electroconductive substance such as carbon black, and an antimicrobial agent. The additives may be used in an amount generally used in the art.

[Preparation of Foaming Raw Liquid]

A method for preparing the foaming raw liquid is not specifically limited, but preferred is a method including preparing a mixture of other components than an isocyanate component (this may be referred to as a polyol mixture) and then further mixing the mixture with an isocyanate component.

For preparing the polyol mixture, a catalyst is mixed with a polyol component and then a foam stabilizer and a foaming agent are mixed with them.

[Foam Molding of Soft Polyurethane Foam]

As a method of foam molding of a soft polyurethane foam, herein employable is a conventionally-known method of injecting a foaming raw liquid into a mold and foam-molding it therein.

From the viewpoint of preventing separation of individual components in the foaming raw liquid, preferably, a foaming raw liquid is previously prepared just before injecting the foaming raw liquid into a mold. In such a case, the liquid temperature of the foaming raw liquid is preferably 10 to 50°C, more preferably 20 to 45°C, even more preferably 20 to 40°C.

The foaming raw liquid is injected into a mold under an atmospheric pressure and then foamed and cured in the mold, and demolded to give a soft polyurethane foam. The temperature of the mold is preferably 40 to 80°C, more preferably 50 to 70°C, even more preferably 55 to 60°C. The curing time is preferably 100 to 600 seconds, more preferably 200 to 500 seconds, even more preferably 250 to 400 seconds.

<Vehicle Seat Pad>

The vehicle seat pad of the present invention includes a soft polyurethane foam satisfying both cushion property and high vibration absorbability and having a low density. Accordingly, the vehicle seat pad of the present invention can satisfy both cushion property and high vibration absorbability and can have a low density.

The vehicle seat pad of the present invention can be produced using a mold having a desired shape as a mold in foam-molding of a soft polyurethane foam.

Examples

Next, the present invention is described in more detail with reference to Examples, but the present invention is not whatsoever restricted by these Examples.

<Preparation of Foaming Raw Liquid>

The other components than the polyisocyanate component in Table 1 and

Table 2 were mixed to give a polyol mixture having a liquid temperature of 20 to 40°C. The polyisocyanate component shown in Table 1 and Table 2 was controlled to have a liquid temperature of 20 to 30°C, and mixed with the polyol mixture to prepare a foaming raw liquid of Examples, Reference Examples and Comparative Examples.

Details of the components shown in Table 1 and Table 2 are as follows.

1. Polyol Component:

1-1. PPG (polyether polyol): "Pluracol 1603" available from BASF Corporation, hydroxyl value 31.5 mgKOH/g
1-2. POP (polymer polyol): "E-850" available from Sumika Covestrourethane Co., Ltd., hydroxyl value 20 mg-KOH/g

2. Isocyanate Component: CORONATE (R) 1021 (TDI/MDI, 80/20 by mass), available from Tosoh Corporation
3. Foaming Agent: water
4. Cell Opening Agent:

4-1. "MULTRANOL 9185" available from Sumika Covestrourethane Co., Ltd., EO content 82 mol%, hydroxyl value 100 mgKOH/g
4-2. "Sannix FA103" available from Sanyo Chemical, Ltd., EO content 70 mol%, hydroxyl value 24 mgKOH/g
4-3. "Volanol 4053" available from Dow Chemical Japan, Ltd., EO content 100 mol%, hydroxyl value 31 mgKOH/g

5. Amine Catalyst:

5-1. Carbon number, less than 11: "triethylenediamine 33% dipropylene glycol solution"
5-2. Carbon number 12: "N,N-dimethyldecylamine"
5-3. Carbon number 14: "N,N-dimethyldodecylamine"
5-4. Carbon number 20: "N,N-dimethyl-n-octadecylamine"
5-5: Carbon number 25: "N,N-didodecylmethylamine"

6. Foam Stabilizer:

6-1. High-activity silicone: "B8742" available from Evonik Corporation, surface tension 23 mN/m
6-2: Foam stabilizer except high-activity silicone: "B8746" available from Evonik Corporation, surface tension 21 mN/m

<Foam Molding>

Immediately after preparation of the foaming raw liquid, the foaming raw liquid was injected into a mold having a mold temperature of 55 to 60°C under an atmospheric pressure, and immediately after injection, depressurization was started. The dimension of the mold is 400 mm in length × 400 mm in width × 100 mm in depth. Subsequently, the foaming raw liquid was foamed and cured in the mold. The curing time was 300 seconds. Next, demolding gave a soft polyurethane foam. The resulting soft polyurethane foam was evaluated according to the methods mentioned below. The evaluation results are shown in Table 1 and Table 2.

In Table 1 and Table 2, "isocyanate component (index)" means a value of the following equation. In the following equation, the equivalent amount of isocyanate means a prophetic isocyanate amount necessary for attaining complete reaction of the active hydrogen to be reacted therein.

"Index" = "blending amount of isocyanate in actual use"/"equivalent amount of isocyanate" × 100

<Evaluation Method>

Density (overall density):

The density of the soft polyurethane foam was determined as an apparent density (unit: kg/m$^3$) of the entire foam measured according to JIS K-6400 (2004).

The weight (W) of the molded rectangular soft polyurethane foam (length 400 mm × width 400 mm × thickness 100 mm) was measured, and then the volume (V) thereof was calculated from the length, the width and the thickness of the cuboid, and the overall density (ρ) was calculated according to the following equation.

$$\rho = (W/V) \times 10^6$$

wherein ρ means an overall density (kg/m$^3$), W means a mass (g) of the sample piece, and V means a volume (mm$^3$) of the sample piece.

A target value of the density is 35 to 64 kg/m$^3$.

Hardness (25% ILD):

The hardness (25% ILD) of the soft polyurethane foam was measured according to the method of JIS K6400, in which the molded rectangular soft polyurethane foam (length 400 mm × width 400 mm × thickness 100 mm) was 25% compressed with a pressure plate having a diameter of 200 mm to measure the load (N). The measurement was in an environment at 23°C and a relative humidity of 50%.

Cushion Property:

A hysteresis loss of the soft polyurethane foam was measured to evaluate the cushion property thereof. The hysteresis loss was measured according to the test method of JIS K6400-2, in which the frequency of precompression and the compression speed of the pressure plate were as follows.

(Precompression)

The molded rectangular soft polyurethane foam (length 400 mm × width 400 mm × thickness 100 mm) is 65% compressed with a pressure plate having a diameter of 200 mm. At this time, the compression speed is 100 mm/min. The compression step is referred to as precompression, and the number of precompression is one.

(Main Test)

After precompression, the main test (compression) is started with no standby time.
The foam is 65% compressed similarly, and the speed of the pressure plate is 100 mm/min.
From the data in the main test, a hysteresis loss is calculated (according to the JIS method).
A target value of the hysteresis loss obtained in the test method is 18% or less, more preferably 16% or less.

In Table 1 and Table 2, the cushion property was evaluated as follows.

| | |
|---|---|
| A (excellent): | hysteresis loss, 16% or less |
| B (good): | hysteresis loss, more than 16% to 18% |
| C (not good): | hysteresis loss, more than 18% |

Vibration Absorbability:

A resonance frequency and a vibration magnification of the soft polyurethane foam are measured to evaluate the vibration absorbability thereof. The resonance frequency and the vibration magnification were measured according to the method of JASO B 408 (performance test method for pad material for vehicle seat).
A target value of the resonance frequency is 3.9 Hz or less, more preferably 3.7 Hz or less, even more preferably 3.6 Hz or less, and a target value of the vibration magnification is 3.8 times or less, more preferably 3.6 times or less, even more preferably 3.3 times or less.
In Tables 1 and 2, the vibration absorbability was evaluated as follows.

A (excellent): vibration magnification, 3.3 times or less, and resonance frequency, 3.6 Hz or less
B (good): Excepting A, vibration magnification, 3.6 times or less, and resonance frequency, 3.7 Hz or less
C (average): Excepting A and B, vibration magnification, 3.8 times or less, and resonance frequency, 3.9 Hz or less
D (not good): vibration magnification, more than 3.8 times, and/or resonance frequency, more than 3.9 Hz

| Table 1 | | Comparative Example 1 | Comparative Example 2 | Comparative Example 3 | Comparative Example 4 |
|---|---|---|---|---|---|
| Polyol Component | PPG | 60 | 60 | 60 | 60 |
| | POP | 40 | 40 | 40 | 40 |
| Isocyanate Component (index) | | 100 | 100 | 100 | 100 |
| Foaming Agent | Water | 3.3 | 3.3 | 3.3 | 3.3 |
| Cell Opening Agent | EO content (82%) polyol | - | - | - | - |
| | EO content (70%) polyol | - | - | - | - |
| | EO content (100%) polyol | - | - | - | - |
| Amine catalyst | Carbon number, less than 11 | 1 | 1 | - | - |
| | Carbon number, 12 | - | - | 1 | 1 |
| | Carbon number, 14 | - | - | - | - |
| | Carbon number, 20 | - | - | - | - |
| | Carbon number, 25 | - | - | - | - |
| Foam Stabilizer | High-activity silicone | 1 | - | 1 | - |
| | Foam stabilizer except high-activity silicone | - | 1 | - | 1 |
| Foam Characteristics | Density (kg/m$^3$) | 57 | 57 | 57 | 57 |
| | Hardness (N) | 270 | 270 | 270 | 270 |

(continued)

| Table 1 | | Comparative Example 1 | Comparative Example 2 | Comparative Example 3 | Comparative Example 4 |
|---|---|---|---|---|---|
| Evaluation | Hysteresis loss (%) | 23 | 22 | 18.5 | 18.5 |
| | Cushion property | C | C | C | C |
| | Vibration magnification (time) | 3.7 | 4 | 3.4 | 2.9 |
| | Resonance frequency (Hz) | 3.7 | 3.6 | 3.6 | 3.9 |
| | Vibration absorbability | C | D | B | D |

| Table 1 (continued) | | Example 1 | Example 2 | Example 3 | Reference Example 4 | Reference Example 5 | Reference Example 6 | Example 7 | Reference Example 8 |
|---|---|---|---|---|---|---|---|---|---|
| Polyol Component | PPG | 58 | 55 | 50 | 55 | 55 | 55 | 55 | 55 |
| | POP | 40 | 40 | 40 | 40 | 40 | 40 | 40 | 40 |
| Isocyanate Component (index) | | 100 | 100 | 100 | 100 | 100 | 100 | 100 | 100 |
| Foaming Agent | Water | 3.3 | 3.3 | 3.3 | 3.3 | 3.3 | 3.3 | 3.3 | 3.3 |
| Cell Opening Agent | EO content (82%) polyol | 2 | 5 | 10 | 5 | 5 | 5 | 5 | 5 |
| | EO content (70%) polyol | - | - | - | - | - | - | - | - |
| | EO content (100%) polyol | - | - | - | - | - | - | - | - |
| Amine catalyst | Carbon number, less than 11 | - | - | - | - | - | - | - | - |
| | Carbon number, 12 | 1 | 1 | 1 | 1 | 1 | 1 | 1 | 1 |
| | Carbon number, 14 | - | - | - | - | - | - | - | - |
| | Carbon number, 20 | - | - | - | - | - | - | - | - |
| | Carbon number, 25 | - | - | - | - | - | - | - | - |
| Foam Stabilizer | High-activity silicone | 1 | 1 | 1 | - | 0.3 | 0.5 | 1 | 1.5 |
| | Foam stabilizer except high-activity silicone | - | - | - | 1 | - | - | - | - |
| Foam Characteristics | Density (kg/m$^3$) | 57 | 57 | 57 | 57 | 57 | 57 | 52 | 57 |
| | Hardness (N) | 270 | 270 | 270 | 270 | 270 | 270 | 230 | 270 |

EP 3 643 731 B1

(continued)

| Table 1 (continued) | | Example 1 | Example 2 | Example 3 | Reference Example 4 | Reference Example 5 | Reference Example 6 | Example 7 | Reference Example 8 |
|---|---|---|---|---|---|---|---|---|---|
| Evaluation | Hysteresis loss (%) | 16.5 | 16 | 15.5 | 16 | 16 | 16 | 17 | 16.5 |
| | Cushion property | B | A | A | A | A | A | B | B |
| | Vibration magnification (time) | 2.8 | 2.9 | 3.2 | 3.6 | 3.6 | 3.4 | 3.3 | 2.8 |
| | Resonance frequency (Hz) | 3.6 | 3.5 | 3.4 | 3.4 | 3.4 | 3.45 | 3.6 | 3.7 |
| | Vibration absorbability | A | A | A | B | B | B | B | B |

| Table 2 | | Reference Example 9 | Example 10 | Example 11 | Example 12 | Example 13 | Example 14 | Example 15 | Reference Example 16 | Reference Example 17 | Reference Example 18 | Reference Example 19 |
|---|---|---|---|---|---|---|---|---|---|---|---|---|
| Polyol Component | PPG | 55 | 55 | 55 | 55 | 55 | 55 | 55 | 55 | 55 | 55 | 55 |
| | POP | 40 | 40 | 40 | 40 | 40 | 40 | 40 | 40 | 40 | 40 | 40 |
| Isocyanate Component (index) | | 100 | 100 | 100 | 100 | 100 | 100 | 100 | 100 | 100 | 100 | 100 |
| Foaming Agent | Water | 3.3 | 3.3 | 3.3 | 3.3 | 3.3 | 3.3 | 3.3 | 3.3 | 3.3 | 3.3 | 3.3 |
| Cell Opening Agent | EO content (82%) polyol | 5 | 5 | 5 | 5 | 5 | 5 | 5 | 5 | 5 | - | - |
| | EO content (70%) polyol | - | - | - | - | - | - | - | - | - | 5 | |
| | EO content (100%) polyol | - | - | - | - | - | - | - | - | - | - | 5 |
| Amine catalyst | Carbon number, less than 11 | - | - | - | - | - | - | - | - | - | - | - |
| | Carbon number, 12 | 1 | 1 | - | - | - | 0.1 | 2 | 1 | 1 | 1 | 1 |
| | Carbon number, 14 | - | - | 1 | - | - | - | - | - | - | - | - |
| | Carbon number, 20 | - | - | - | 1 | - | - | - | - | - | - | - |
| | Carbon number, 25 | - | - | - | - | 1 | - | - | - | - | - | - |
| Foam Stabilizer | High-activity silicone | 1.8 | 1 | 1 | 1 | 1 | 1 | 1 | 5 | 3 | 3 | 3 |
| | Foam stabilizer except high-activity silicone | - | - | - | - | - | - | - | - | - | - | - |

EP 3 643 731 B1

13

(continued)

| Table 2 | | Reference Example 9 | Example 10 | Example 11 | Example 12 | Example 13 | Example 14 | Example 15 | Reference Example 16 | Reference Example 17 | Reference Example 18 | Reference Example 19 |
|---|---|---|---|---|---|---|---|---|---|---|---|---|
| Foam Characteristics | Density (kg/m³) | 57 | 47 | 57 | 57 | 57 | 57 | 57 | 57 | 57 | 57 | 57 |
| | Hardness (N) | 270 | 190 | 270 | 270 | 270 | 270 | 270 | 270 | 270 | 270 | 270 |
| | Hysteresis loss (%) | 17 | 18 | 15.8 | 15.5 | 15.5 | 15.8 | 17 | 17.5 | 17.5 | 17.5 | 17.5 |
| | Cushion property | B | B | A | A | A | A | B | B | B | B | B |
| Evaluation | Vibration magnification (time) | 2.75 | 3.6 | 3.15 | 3.4 | 3.65 | 3.6 | 2.7 | 2.6 | 2.6 | 2.6 | 2.6 |
| | Resonance frequency (Hz) | 3.8 | 3.7 | 3.45 | 3.4 | 3.35 | 3.4 | 3.8 | 3.9 | 3.9 | 3.9 | 3.9 |
| | Vibration absorbability | C | B | A | B | C | B | C | C | C | C | C |

From Table 1 and Table 2, the soft polyurethane foams of Examples 1 to 3, 7 and 10 to 15, and Reference Examples 4-6, 8-9 and 16 to 19 all satisfy the requirements that the hysteresis loss is 18% or less, the resonance frequency is 3.9 Hz or less, the vibration magnification is 3.8 times or less, and the density is 35 to 64 kg/m3, and are confirmed to be low-density soft polyurethane foams satisfying cushion property and high vibration absorbability.

In Tables 1 and 2, "index" is calculated according to the following equation.

"Index" = "blending amount of isocyanate in actual use"/"equivalent amount of isocyanate" $\times$ 100

The equivalent amount of isocyanate means a prophetic isocyanate amount necessary for attaining complete reaction of the active hydrogen to be reacted therein.

Industrial Applicability

The soft polyurethane foam of the present invention can satisfy both cushion property and high vibration absorbability and can have a low density, and is therefore suitable for vehicle seat pads.

**Claims**

1.    A composition for soft polyurethane foam, comprising a polyol component, an isocyanate component, a foaming agent, a cell opening agent, a foam stabilizer and a catalyst, wherein:

     the catalyst is an amine catalyst having 11 or more carbon atoms,
     the cell opening agent is a polyol having an ethylene oxide content of more than 50 mol%,
     the foam stabilizer is a high-activity silicone,
     the high-activity silicone has a surface tension of 22 mN/m or more, measured according to a capillary-rise method, and
     the content of the high-activity silicone foam stabilizer is 0.7 to 1.2 parts by mass per 100 parts by mass of the polyol component.

2.    A soft polyurethane foam, which is formed by foaming a foaming raw liquid comprising a polyol component, an isocyanate component, a foaming agent, a cell opening agent, a foam stabilizer and a catalyst, wherein:

     the catalyst is an amine catalyst having 11 or more carbon atoms, and
     the cell opening agent is a polyol having an ethylene oxide content of more than 50 mol%,
     the foam stabilizer is a high-activity silicone,
     the high-activity silicone has a surface tension of 22 mN/m or more, measured according to a capillary-rise method, and
     the content of the high-activity silicone foam stabilizer is 0.7 to 1.2 parts by mass per 100 parts by mass of the polyol component.

3.    The soft polyurethane foam according to claim 2, wherein the blending amount of the catalyst is 1.5 parts by mass or less per 100 parts by mass of the polyol component.

4.    The soft polyurethane foam according to claim 2 or 3, wherein the catalyst is an amine catalyst having 11 to 24 carbon atoms.

5.    The soft polyurethane foam according to any one of claims 2 to 4, wherein the blending amount of the foam stabilizer is 0.5 parts by mass or more per 100 parts by mass of the polyol component.
10985515-1

6.    A vehicle seat pad comprising a soft polyurethane foam of any one of claims 2 to 5.

7.    The composition for soft polyurethane foam according to claim 1 or the soft polyurethane foam according to claim 2, wherein the isocyanate component comprises tolylene diisocyanate.

**Patentansprüche**

1. Zusammensetzung für weichen Polyurethanschaumstoff, die eine Polyol-Komponente, eine Isocyanat-Komponente, ein Schäummittel, einen Zellöffner, einen Schaumstabilisator und einen Katalysator umfasst, wobei:

   der Katalysator ein Amin-Katalysator ist, der 11 oder mehr Kohlenstoffatome aufweist,
   der Zellöffner ein Polyol ist, das einen Ethylenoxid-Gehalt von mehr als 50 Mol-% aufweist,
   der Schaumstabilisator ein Silikon mit hoher Aktivität ist,
   das Silikon mit hoher Aktivität eine Oberflächenspannung von 22 mN/m oder mehr, gemessen nach einem Kapillaraufstiegsverfahren, aufweist und
   der Gehalt des Hochaktivitätssilikon-Schaumstabilisators 0,7 bis 1,2 Masseteile auf 100 Masseteile der Polyol-Komponente beträgt.

2. Weicher Polyurethanschaumstoff, der durch Aufschäumen einer Aufschäumungsrohflüssigkeit gebildet ist, die eine Polyol-Komponente, eine Isocyanat-Komponente, ein Schäummittel, einen Zellöffner, einen Schaumstabilisator und einen Katalysator umfasst, wobei:

   der Katalysator ein Amin-Katalysator ist, der 11 oder mehr Kohlenstoffatome aufweist, und
   der Zellöffner ein Polyol ist, das einen Ethylenoxid-Gehalt von mehr als 50 Mol-% aufweist,
   der Schaumstabilisator ein Silikon mit hoher Aktivität ist,
   das Silikon mit hoher Aktivität eine Oberflächenspannung von 22 mN/m oder mehr, gemessen nach einem Kapillaraufstiegsverfahren, aufweist und
   der Gehalt des Hochaktivitätssilikon-Schaumstabilisators 0,7 bis 1,2 Masseteile auf 100 Masseteile der Polyol-Komponente beträgt.

3. Weicher Polyurethanschaumstoff nach Anspruch 2, wobei die Mischungsmenge des Katalysators 1,5 Masseteile oder weniger auf 100 Masseteile der Polyol-Komponente beträgt.

4. Weicher Polyurethanschaumstoff nach Anspruch 2 oder 3, wobei der Katalysator ein Amin-Katalysator ist, der 11 bis 24 Kohlenstoffatome aufweist.

5. Weicher Polyurethanschaumstoff nach einem der Ansprüche 2 bis 4, wobei die Mischungsmenge des Schaumstabilisators 0,5 Masseteile oder mehr auf 100 Masseteile der Polyol-Komponente beträgt.

6. Fahrzeugsitz, der einen weichen Polyurethanschaumstoff nach einem der Ansprüche 2 bis 5 umfasst.

7. Zusammensetzung für weichen Polyurethanschaumstoff nach Anspruch 1 oder weicher Polyurethanschaumstoff nach Anspruch 2, wobei die Isocyanat-Komponente Toluoldiisocyanat umfasst.

**Revendications**

1. Composition pour mousse de polyuréthanne souple, comprenant un composant polyol, un composant isocyanate, un agent moussant, un agent d'ouverture des cellules, un stabilisateur de mousse et un catalyseur, dans laquelle :

   le catalyseur est un catalyseur amine ayant 11 atomes de carbone ou plus ;
   l'agent d'ouverture des cellules est un polyol ayant une teneur en oxyde d'éthylène supérieure à 50 % en moles ;
   le stabilisateur de mousse est un silicone à haute activité ;
   le silicone à haute activité présente une tension superficielle de 22 mN/m ou plus, mesurée selon une méthode de remontée cellulaire ; et
   la teneur en stabilisateur de mousse de silicone à haute activité représente 0,7 à 1,2 parties en masse pour 100 parties en masse du composant polyol.

2. Mousse de polyuréthanne souple, qui est formée par moussage d'un liquide brut moussant comprenant un composant polyol, un composant isocyanate, un agent moussant, un agent d'ouverture des cellules, un stabilisateur de mousse et un catalyseur, dans laquelle :

   le catalyseur est un catalyseur amine ayant 11 atomes de carbone ou plus ; et

l'agent d'ouverture des cellules est un polyol ayant une teneur en oxyde d'éthylène supérieure à 50 % en moles ;
le stabilisateur de mousse est un silicone à haute activité ;
le silicone à haute activité présente une tension superficielle de 22 m/N/m ou plus, mesurée selon une méthode de remontée capillaire ; et
la teneur en stabilisateur de mousse de silicone à haute activité représente 0,7 à 1,2 parties en masse pour 100 parties en masse du composant polyol.

3. Mousse de polyuréthane souple selon la revendication 2, dans laquelle la quantité de mélange du catalyseur représente 1,5 partie en masse ou moins pour 100 parties en masse du composant polyol.

4. Mousse de polyuréthane souple selon les revendications 2 ou 3, dans laquelle le catalyseur est un catalyseur amine ayant 11 à 24 atomes de carbone.

5. Mousse de polyuréthane souple selon l'une quelconque des revendications 2 à 4, dans laquelle la quantité de mélange du stabilisateur de mousse représente 0,5 partie en masse ou plus pour 100 parties en masse du composant polyol.

6. Coussin de siège de véhicule, comprenant une mousse de polyuréthane souple selon l'une quelconque des revendications 2 à 5.

7. Composition pour mousse de polyuréthane souple selon la revendication 1 ou mousse de polyuréthane souple selon la revendication 2, dans laquelle le composant isocyanate comprend du diisocyanate de toluène.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016030802 A